(19) Europäisches Patentamt
European Patent Office
Office européen des brevets

(11) **EP 2 917 992 B1**

(12) **FASCICULE DE BREVET EUROPEEN**

(45) Date de publication et mention
de la délivrance du brevet:
**04.01.2017 Bulletin 2017/01**

(21) Numéro de dépôt: **13789748.4**

(22) Date de dépôt: **04.11.2013**

(51) Int Cl.:
**H02J 3/36** (2006.01)

(86) Numéro de dépôt international:
**PCT/EP2013/072917**

(87) Numéro de publication internationale:
**WO 2014/072246 (15.05.2014 Gazette 2014/20)**

(54) **PROCEDE DE CONTRÔLE D'UN RESEAU MULTI-TERMINAL VSC-HVDC**

VERFAHREN ZUR STEUERUNG EINES VSC-HVDC-NETZWERKS MIT MEHREREN ENDGERÄTEN

METHOD FOR CONTROLLING A MULTI-TERMINAL VSC-HVDC

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2012 FR 1260534**

(43) Date de publication de la demande:
**16.09.2015 Bulletin 2015/38**

(73) Titulaire: **General Electric Technology GmbH
5400 Baden (CH)**

(72) Inventeurs:
• **BENCHAIB, Abdelkrim**
**F-78180 Montigny Le Bretonneux (FR)**
• **GHOURABI, Imen**
**70567 Stuttgart (DE)**
• **CARDOZO, Carmen**
**1060 Municipio Baruta - Estado Miranda - Caracas (VE)**

(74) Mandataire: **Brevalex
95, rue d'Amsterdam
75378 Paris Cedex 8 (FR)**

(56) Documents cités:

• **Temesgen Haileselassie ET AL: "Control of Multiterminal HVDC Transmission for Offshore Wind Energy", Nordic Wind Power Conference, 11 septembre 2009 (2009-09-11), XP055073201, Bornholm Extrait de l'Internet: URL:http://www.elkraft.ntnu.no/eno/Papers2 009/NWPC-2009-Temesgen.pdf [extrait le 2013-07-26]**
• **DIERCKXSENS C ET AL: "A distributed DC voltage control method for VSC MTDC systems", ELECTRIC POWER SYSTEMS RESEARCH, ELSEVIER, AMSTERDAM, NL, vol. 82, no. 1, 4 août 2011 (2011-08-04), pages 54-58, XP028318592, ISSN: 0378-7796, DOI: 10.1016/J.EPSR.2011.08.006 [extrait le 2011-08-12] cité dans la demande**
• **FRANCISCO GONZALEZ-LONGATT ET AL: "Effects of dc voltage control strategies of voltage response on multi-terminal HVDC following a disturbance", UNIVERSITIES POWER ENGINEERING CONFERENCE (UPEC), 2012 47TH INTERNATIONAL, IEEE, 4 septembre 2012 (2012-09-04), pages 1-6, XP032291247, DOI: 10.1109/UPEC.2012.6398553 ISBN: 978-1-4673-2854-8**
• **HAILESELASSIE T M ET AL: "Power flow analysis of multi-terminal HVDC networks", 2011 IEEE TRONDHEIM POWERTECH : TRONDHEIM, NORWAY, 19 - 23 JUNE 2011, IEEE, PISCATAWAY, NJ, 19 juin 2011 (2011-06-19), pages 1-6, XP032263573, DOI: 10.1109/PTC.2011.6019349 ISBN: 978-1-4244-8419-5**

EP 2 917 992 B1

**Description**

**DOMAINE TECHNIQUE**

L'invention concerne un procédé de contrôle d'un réseau multi-terminal VSC-HVDC.

**ÉTAT DE LA TECHNIQUE ANTÉRIEURE**

Le domaine de l'ingénierie de puissance est confronté à d'énormes défis, notamment du fait que les énergies intermittentes renouvelables, qui présentent un intérêt croissant, nécessitent un grand nombre de limitations techniques. En effet, l'utilisation de telles énergies doit pouvoir garantir un fonctionnement sûr, autonome, propre et compétitif, qui puisse être maintenu. La génération de puissance éolienne est une solution réaliste qui a incité différents pays à installer des fermes éoliennes offshore. En Europe, le potentiel éolien offshore est capable de couvrir 7 fois sa demande totale. Le réseau HVAC (très hautes tensions en courant alternatif) fournit un procédé simple et économique pour des courtes distances. Mais la distance des fermes offshore à la terre, qui dépasse 50 à 80 km, rend nécessaire une transmission en HVDC (haute tension courant continu) comme décrit dans les documents référencés [2] et [3] en fin de description. De plus, la circulation d'un courant continu (DC), au lieu d'un courant alternatif (AC), à travers les mêmes pylônes et lignes, permet de transmettre jusqu'à trois fois plus de puissance dans une même voie de passage. Les systèmes HVDC peuvent utiliser deux technologies différentes : les convertisseurs à source de courant classiques (CSC) HVDC et les convertisseurs à sources de tension (VSC) HVDC. Les spécificités de la technologie CSC ne permettent pas un fonctionnement multi-terminal dans le cas où plus de trois convertisseurs sont utilisés. La technologie VSC, comme décrit dans le document référencé [3], est nettement meilleure que la technologie CSC en termes de commande de puissance active et réactive, indépendante, rapide et flexible. Un changement de direction de transit de puissance dans un système CSC est complexe et nécessite une commutation mécanique. Par contre un convertisseur VSC, qui se comporte comme un générateur synchrone, permet de résoudre un tel problème de changement de direction de transit de puissance.

Le contrôle de tension DC est l'une des principales taches d'un convertisseur à source de tension VSC dans un réseau de transmission VSC-HVDC. La tension DC doit être contrôlée à l'intérieur de limites strictes afin de garantir un équilibre de puissance entre tous les terminaux de transmission du réseau multi-terminal VSC-HVDC. Dans un système de transmission HVDC point à point, l'un des terminaux contrôle la tension DC de la liaison de transmission tandis que l'autre terminal contrôle la puissance active envoyée à l'interconnexion. Ce type de contrôle correspond à une stratégie de contrôle « maître/esclave ». Mais, il n'est pas évident de faire fonctionner un réseau VSC-HVDC avec un seul terminal qui contrôle la tension DC principalement pour deux raisons : la puissance nominale du terminal VSC, qui contrôle la tension DC, est limitée et l'existence éventuelle de défauts dans le réseau AC connecté à ce terminal peut déclencher un équipement de protection en seulement quelques cycles du réseau AC. Une distribution de la responsabilité du contrôle de tension DC à plus d'un terminal VSC pour faire fonctionner un système VSC-HVDC serait donc avantageuse.

Les documents référencés [1] à [5] en fin de description décrivent différents systèmes de l'art connu dans le domaine de l'invention. Le document [1] décrit le contrôle d'un convertisseur autonome dans un système HVDC multi-terminal. Le développement et la disponibilité croissante de multiples vendeurs de la technologie convertisseur à source de tension (VSC), l'étude de réseaux multi-terminal HVDC qui sont des réseaux HVDC composés de plusieurs convertisseurs est devenue réalité. Dans de tels réseaux, la puissance qui entre ou sort de chaque convertisseur peut être changée dynamiquement sans reconfiguration du réseau HVDC. Le document [2] décrit la gestion du réseau DC d'un système de transmission multi-terminal HVDC pour de grandes fermes éoliennes offshore. Le document [3] décrit la connexion VSC multi-terminal HVDC de fermes éoliennes offshore. Le document [4] décrit des systèmes multi-terminal VSC-HVDC avec un contrôle de tension DC distribuée avec une approche à flux de puissance. Le document [5] décrit un procédé de contrôle de tension DC distribuée pour des systèmes multi-terminal VSC-HVDC.

Le document "Control of Multiterminal HVDC Transmission for Offshore Wind Energy" de Temesgen Haileselassie, daté du 11 septembre 2009 divulgue un procédé de contrôle d'un réseau multi-terminaux HVDC selon le préambule de la revendication 1.

L'objet de l'invention est de proposer un procédé de contrôle primaire et secondaire d'un réseau multi-terminal VSC-HVDC qui puisse être aisément intégré par des opérateurs de transmission et de distribution.

**EXPOSÉ DE L'INVENTION**

L'invention concerne un procédé de contrôle d'un réseau multi-terminal VSC-HVDC comprenant une stratégie de contrôle primaire tendant à revenir à un équilibre production de puissance-consommation de puissance et une stratégie de contrôle secondaire pour réduire toute variation de tension due à la première stratégie, caractérisé en ce qu'il comporte les étapes suivantes :

- dans une période de temps t comprise entre 0 et T, on réalise un calcul de transit de puissance en fonctionnement normal, avec un noeud pris comme convertisseur maître,
- au temps t=T, on produit une perturbation en un premier noeud autre que le noeud précédent,
- dans la période de temps t comprise entre T et 2T, un contrôle de tension « droop » est actif et la perte de puissance est répartie sur les autres noeuds,
- au temps t=2T, on applique un contrôle secondaire suivant une stratégie maître/esclave, en fixant la tension à sa valeur avant la perturbation,
- au temps t=3T, l'injection de puissance au premier noeud revient à sa valeur initiale, c'est-à-dire avant la perturbation, et le contrôle de tension « droop » est réactivé,
- au temps t=4T, on active un contrôle secondaire pour réduire la variation des tensions DC en appliquant une stratégie de contrôle de tension DC maître/esclave.

Avantageusement lors de la stratégie primaire on applique une stratégie de contrôle de tension DC de type « droop », et lors de la stratégie secondaire on applique une stratégie de contrôle de tension DC selon la topologie et la puissance des noeuds interconnectés, par exemple une stratégie de type maître/esclave ou une stratégie par marge de tension.

Avantageusement T est adapté aux réponses des systèmes interconnectés sur le réseau, par exemple T=50 secondes.

Il faut noter, en effet, que les dernières avancées technologiques permettent d'envisager l'utilisation de la technologie VSC-HVDC dans une gamme de puissance supérieure. L'utilisation d'un système multi-terminal VSC-HVDC est donc envisageable. Le procédé de contrôle d'un tel réseau VSC-HVDC selon l'invention permet alors d'interconnecter des fermes éoliennes offshore situées à distance à plusieurs points à l'infrastructure AC existante, pour fournir un réseau plus sûr. Un tel réseau VSC-HVDC présente de nombreux avantages économiques et techniques par rapport à un réseau HVAC.

**BRÈVE DESCRIPTION DES DESSINS**

La figure 1 illustre un réseau HVDC à trois terminaux.
Les figures 2 et 3 illustrent un contrôle de tension de type « maître/esclave ».
Les figures 4 et 5 illustrent un contrôle de tension de type par « marge de tension ».
Les figures 6 et 7 illustrent un contrôle de tension de type « droop ».
La figure 8 illustre la modélisation d'un réseau HVDC.
La figure 9 illustre une méthode généralisée de calcul de transit de puissance DC.
La figure 10 illustre un organigramme de résolution de la méthode illustrée sur la figure 9.
La figure 11 illustre la mise en oeuvre de la méthode illustrée sur la figure 9.
Les figures 12A et 12B et 13A et 13B illustrent le fonctionnement du procédé de l'invention.

**EXPOSÉ DÉTAILLÉ DE MODES DE RÉALISATION PARTICULIERS**

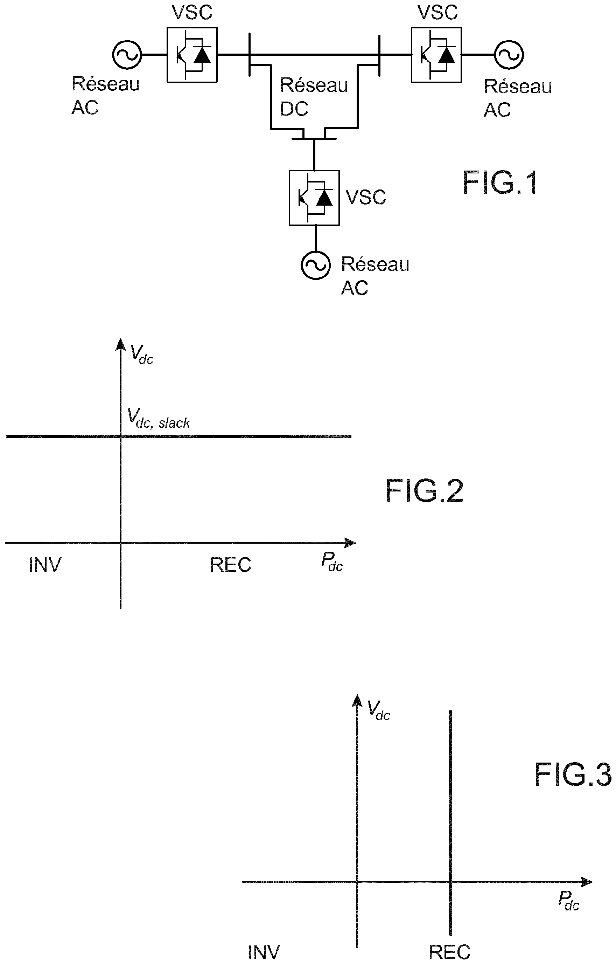

Un réseau HVDC comprenant ici trois terminaux, tel que représenté sur la figure 1, présente les spécificités suivantes :

- La tension DC dans un tel réseau HVDC est équivalente à la fréquence dans un réseau HVAC en termes d'équilibre dans le réseau. Elle change lorsque la production est différente de la consommation.
- Le transit de puissance (active) est dicté par des amplitudes de tensions entre les différents noeuds.
- la matrice d'admittance contient seulement les résistances des câbles, car on ne prend en considération que le régime permanent.
- En un noeud, on peut contrôler soit l'injection de puissance soit la tension DC.

Les différentes stratégies de contrôle de la tension DC dans un réseau HVDC vont, à présent, être passées en revue.

1. la stratégie de contrôle de tension « maître/esclave »

Dans cette stratégie illustrée sur les figures 2 et 3 et décrite dans le document référencé [1], n-1 convertisseurs d'un ensemble de n convertisseurs contrôlent l'injection de la puissance active (puissance constante). Un seul convertisseur contrôle la tension DC (tension constante). Ce convertisseur agit comme un convertisseur maître ou « slack bus » ou bus de référence, ce qui signifie qu'il fournit ou absorbe suffisamment de puissance active pour permettre un équilibre de puissance dans le réseau pour une tension imposée ou une tension donnée. Il adapte automatiquement sa puissance de sortie pour compenser les changements de puissance dans le réseau, par exemple une variation de puissance dans un noeud. Un seul opérateur prend donc la responsabilité de faire face aux problèmes dans le réseau multi-terminal.

2. la stratégie de contrôle de tension par « marge de tension » (« Margin Control »)

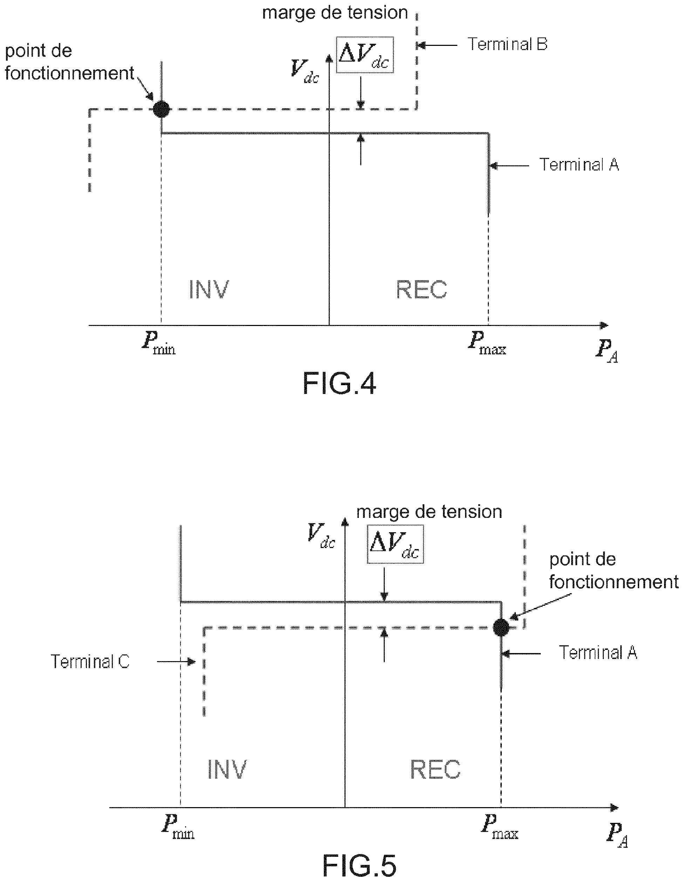

Dans cette stratégie illustrée sur les figures 4 et 5 et décrite dans le document référencé [5], un premier convertisseur (Terminal A) travaille comme convertisseur maître en contrôlant la tension DC jusqu'à ce qu'il arrive à sa limite maximale ou minimale d'injection de puissance. Il passe alors la main à un autre convertisseur (Terminal B) ayant une limite maximale supérieure ou une limite minimale inférieure. Ce second convertisseur joue alors le rôle de convertisseur maître et le premier convertisseur contrôle la puissance à sa limite maximale ou minimale. On distribue ainsi des « marges » à différents noeuds, ou convertisseurs, du réseau. Mais se pose alors le problème de savoir comment consigner ces marges. 3. la stratégie de contrôle de tension « droop » ou

« statisme » (« Droop control »)

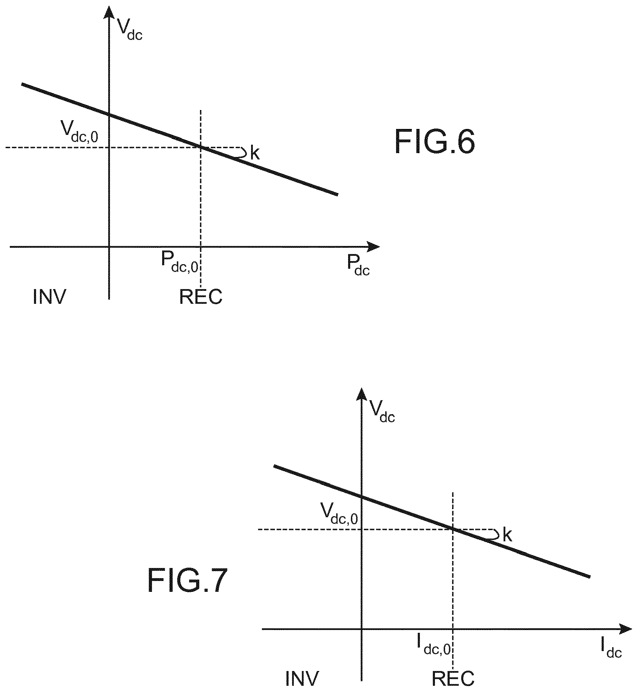

Dans cette stratégie décrite dans les documents référencés [3] et [5], le contrôle de tension DC est réparti sur plusieurs convertisseurs, qui adaptent simultanément leurs injections de puissance active pour tenir compte de situations perturbées du réseau. Le contrôle de la tension DC est réparti en suivant l'une des caractéristiques illustrées sur les figures 6 et 7. Les termes « INV » et « REC » employés sur les figures 2 à 7 correspondent respectivement à un fonctionnement en onduleur (« Inverter ») et en redresseur (« Rectifier »). Ce contrôle utilise un mécanisme « droop » pour réguler la tension DC en ajustant les injections de puissance des convertisseurs (figure 6) ou les injections de courant (figure 7). Sur la figure 6,

$$P_{ac,i} = P_{dcx,i} - \frac{1}{k_{P,i}}(V_{dc,i} - V_{dc,o,i})$$

Sur la figure 7,

$$I_{ac,i} = I_{ac,o,i} - \frac{1}{k_{I,i}}(V_{dc,v} - V_{dc,o,i})$$

Avec

$$k_{p,i} = \frac{DV_{dc}}{DP_{dc}}$$

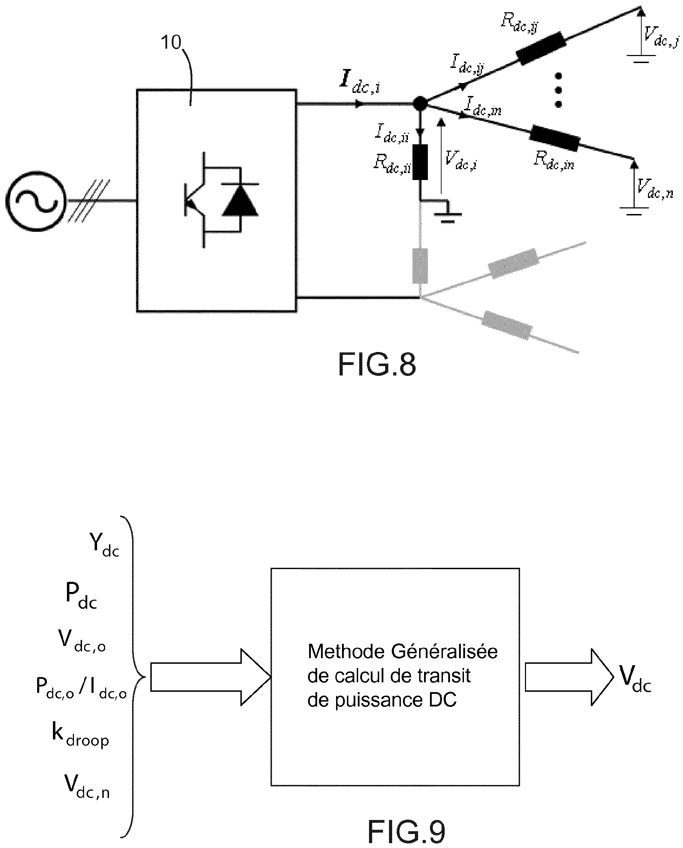

Chaque convertisseur contribue au contrôle à la mesure de ses moyens. La modélisation d'un réseau HVDC, avec un convertisseur VSC 10 est illustrée sur la figure 8. Le courant injecté au noeud i est calculé comme la somme des courants circulants des n-1 autres noeuds interconnectés et du courant circulant dans la résistance $R_{dc,ii}$. Sous forme vectorielle et matricielle la relation entre les n courants injectés, les n tensions DC et les admittances de ligne s'écrit :

$$I_{dc} = Y_{dc} V_{dc}$$

avec les vecteurs suivants :

$$I_{dc} = [I_{dc,1}, I_{dc,2}, ..., I_{dc,n}]^T$$

$$V_{dc} = \begin{bmatrix} V_{dc,1}, V_{dc,2}, ..., V_{dc,n} \end{bmatrix}^T$$

et la matrice admittance DC :

$$Y_{dc} = \begin{bmatrix} Y_{dc,11} & \cdots & Y_{dc,1n} \\ \vdots & \ddots & \vdots \\ Y_{dc,n1} & \cdots & Y_{dc,nn} \end{bmatrix}$$

$$Y_{dc,ij} = Y_{dc,ji} = -\frac{1}{R_{dc,ij}}$$

$$Y_{dc,ii} = \sum_{\substack{j=1 \\ j \neq i}}^{n} \frac{1}{R_{dc,ij}} + \frac{1}{R_{dc,ii}} = \sum_{j=1}^{n} \frac{1}{R_{dc,ij}}$$

La puissance active dans chaque noeud est telle que :

$$P_{dc,i} = 2V_{dc,i} I_{dc,i}$$

$$P_{dc,i} = 2V_{dc,i} \cdot \left( \left( \sum_{\substack{j=1 \\ j \neq i}}^{n} \frac{1}{R_{dc,ij}} \cdot (V_{dc,i} - V_{dc,j}) \right) + \frac{V_{dc,i}}{R_{dc,ii}} \right)$$

Cette expression est utilisée pour calculer l'injection de puissance dans chaque noeud DC, lorsque les valeurs de tension sont préalablement connues. En effet, dans un réseau DC les noeuds sont des contrôleurs de puissance ou des contrôleurs de tension, ce qui signifie que dans un noeud la variable connue est soit la tension DC soit l'injection de puissance DC. Un système d'équations non linéaires doit alors être résolu. C'est le rôle du calcul de transit de puissance.

Méthode généralisée de calcul de transit de puissance DC

Le calcul de transit de puissance a pour objet de permettre d'atteindre un point de fonctionnement stable du réseau, en résolvant un système d'équations non linéaires. Ce calcul permet d'analyser les systèmes de puissance et peut être utilisé pour trouver un point de départ pour une analyse de système dynamique ou pour faire une analyse de contingence. En partant du modèle mathématique du réseau DC, les équations peuvent être réécrites en utilisant une méthode de résolution choisie par exemple la technique de Newton Raphson. La méthode généralisée offre la possibilité d'intégrer un contrôle de tension DC « droop ».
La méthode généralisée permet d'inclure des convertisseurs sous contrôle de tension distribué. Cette méthode permet d'obtenir les tensions DC. Les injections de puissance non connues peuvent alors être calculées.

Comme illustré sur la figure 9, les entrées de ce calcul sont :

- la tension DC dans le convertisseur maître $V_{dc,n}$
- l'injection de puissance DC Pdc dans les noeuds de commande de puissance
- la matrice d'admittance $y_{dc}$
- les contrôleurs « droop » $V_{dc,0}$, $P_{dc,o}/I_{dc,o}$, les sorties sont les tensions $V_{dc}$.

Pour la résolution des équations non linéaires, on utilise le Jacobien (dérivée multidimensionnelle) qui a la forme suivants :

$$J(\mathbf{V}_{dc}) \; : \; \left( V_{dc} \frac{\partial X_{dc,\mathrm{mod},cal}}{\partial V_{dc}} \right)^{(j)} \cdot \left( \frac{\Delta V_{dc}}{V_{dc}} \right)^{(j)} = \Delta X_{dc,\mathrm{mod}}^{(j)}$$

avec droop courant/tension ; on a :

$$X_{dc,\mathrm{mod}} = [P_{dc,1},...,P_{dc,k},I_{dc,o,k+1},...,I_{dc,o,m}]^T$$

avec droop puissance/tension ; on a :

$$\mathbf{X}_{dc,\mathrm{mod}} = [P_{dc,1},...,P_{dc,k},P_{dc,o,k+1},...,P_{dc,o,m}]^T$$

$$X_{dc,\mathrm{mod},cal} = f(V_{dc})$$

$$\Delta X_{dc,\mathrm{mod}}^{(j)} = X_{dc,\mathrm{mod}} - X_{dc,\mathrm{mod},cal}$$

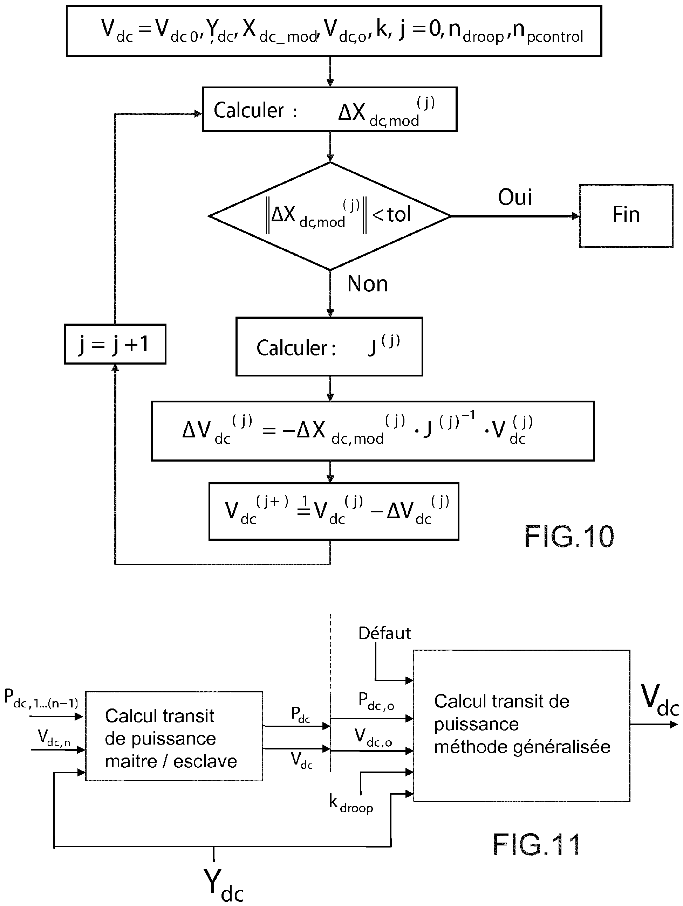

L'organigramme de résolution de transit de puissance utilisant cette méthode généralisée avec contrôle tension/puissance est illustré sur la figure 10.

Le réseau HVDC est lancé après un calcul de transit de puissance basé sur la stratégie maître/esclave pour calculer les conditions initiales. Ensuite un algorithme plus généralisé adapté à la stratégie choisie (maître/esclave, marge de tension ou droop) est lancé pour calculer les nouveaux points de fonctionnement du réseau multiterminal.

La mise en oeuvre de cette méthode est illustrée sur la figure 11. Pour obtenir les points de référence et construire les caractéristiques « droop », on calcule un transit de puissance dans une condition normale, où un seul convertisseur travaille à une tension DC constante. Puis, une perturbation est introduite et l'état d'équilibre peut être trouvé, après que tous les processus transitoires ont disparu (non modélisés).

On va, à présent, considérer la stratégie de contrôle secondaire du procédé de l'invention.

## Stratégie de contrôle secondaire du réseau HVDC selon l'invention

Dans tout système électrique la génération et la consommation de puissance active doivent se compenser pour éviter toute coupure de courant. Les unités de génération de puissance, et même les charges dans certains cas, doivent être contrôlées pour maintenir un équilibre de puissance de telle sorte que les utilisateurs du réseau ne soient pas affectés par des changements de charge ou par des pannes de génération et de transmission de puissance.

Dans un réseau multi-terminal AC, un contrôle secondaire pilote la fréquence du système et les échanges de puissance transfrontière de retour vers les valeurs souhaitées originales après 15 à 30 secondes si la puissance requise activée n'atteint pas la limite de saturation de la réserve.

Dans un réseau multi-terminal VDC-HVDC la tension DC est contrôlée et doit être maintenue dans une marge acceptable de + 10%. Le contrôle primaire tend à revenir à l'équilibre production de puissance-consommation de puissance. Le contrôle secondaire a pour objet de réduire la variation de tension due au premier contrôle.

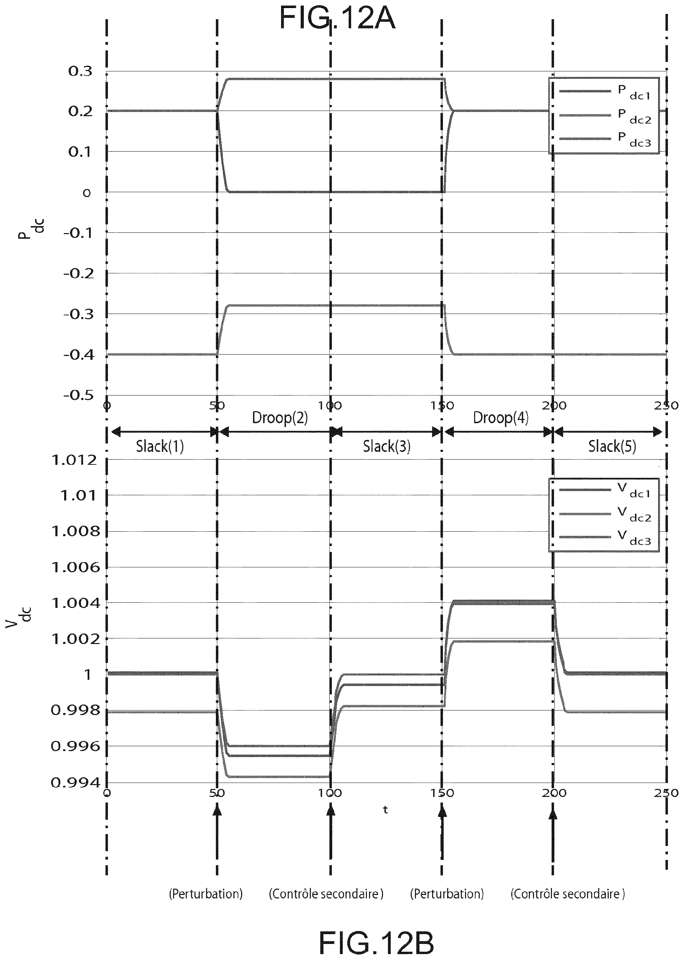

Une telle approche de contrôle secondaire selon l'invention est à présent appliquée à un réseau HVDC à trois terminaux (système maillé le plus simple). Les figures 12A et 12B illustrent le procédé de l'invention qui est un procédé d'équilibrage de puissance comprenant un contrôle primaire et un contrôle secondaire suivant une échelle de temps déterminée, tel que défini ci-après :

- dans une période de temps t comprise entre 0 et T, T étant adapté aux réponses des systèmes interconnectés sur le réseau par exemple égal à 50 secondes, on réalise un calcul de transit de puissance en fonctionnement normal, c'est-à-dire avant toute perturbation : avec un noeud (ici le noeud 3) comme convertisseur maître (bus référence ou « slack bus »),
- au temps t=T, on produit une perturbation en un premier noeud (ici le noeud 1) autre que noeud précédent sous la forme d'un échelon de puissance, où l'injection de puissance tombe à zéro,
- dans la période de temps t comprise entre T et 2T, le contrôle « droop » de tension est actif et la perte de puissance est répartie sur les autres noeuds (ici les noeuds 2 et 3), formant ainsi un contrôle primaire, une génération de puissance étant perdue, ce qui à pour conséquence une diminution de la tension DC dans tous les noeuds,
- au temps t=2T, on applique un contrôle secondaire et les variations de tension sont réduites, ce contrôle secondaire suivant une stratégie maître/esclave, en fixant la tension à sa valeur avant la perturbation. Les valeurs de puissance dans tous les noeuds ayant subi une légère variation comme illustré sur la figure 12A,
- au temps t=3T, l'injection de puissance au premier noeud revient à sa valeur initiale, c'est-à-dire avant la perturbation, et le contrôle de tension « droop » est réactivé, les injections de puissance dans les deux autres noeuds (noeuds 2 et 3) revenant également à leurs valeurs initiales, avec une augmentation des tensions DC,
- au temps t=4T, un contrôle secondaire est activé pour réduire la variation des tensions DC en appliquant une fois de plus une stratégie de contrôle de tension DC maître/esclave de telle façon que les tensions DC retrouvent leurs valeurs initiales avec une variation imperceptible de l'injection de puissance du convertisseur maître.

Une évolution détaillée de la puissance DC et de la tension DC des trois noeuds est représentée dans le tableau ci-dessous.

| Noeud 1 | | | Noeud 2 (k=0,03) | | | Noeud 3 (k=0,05) | | |
|---|---|---|---|---|---|---|---|---|
| Zone | Pdc (pu) | Vdc (pu) | Zone | Pdc (pu) | Vdc (pu) | Zone | Pdc (pu) | Vdc (pu) |
| (1) | 0,2000 | 1,0001 | (1) | -0,4000 | 0,9979 | (1) | 0,2009 | 1,0000 |
| (2) | 0 | 0,9955 | (2) | -0,2794 | 0,9943 | (2) | $27{,}9919e^{-2}$ | 0,9960 |
| (3) | 0 | 0,9994 | (3) | -0,2794 | 0,9982 | (3) | $27{,}9915e^{-2}$ | 1,0000 |
| (4) | 0,200 | 1,0041 | (4) | -0,4000 | 1,0019 | (4) | $20{,}0088e^{-2}$ | 1,0040 |
| (5) | 0,2000 | 1,0001 | (5) | -0,4000 | 0,9979 | (5) | 0,2009 | 1,0000 |

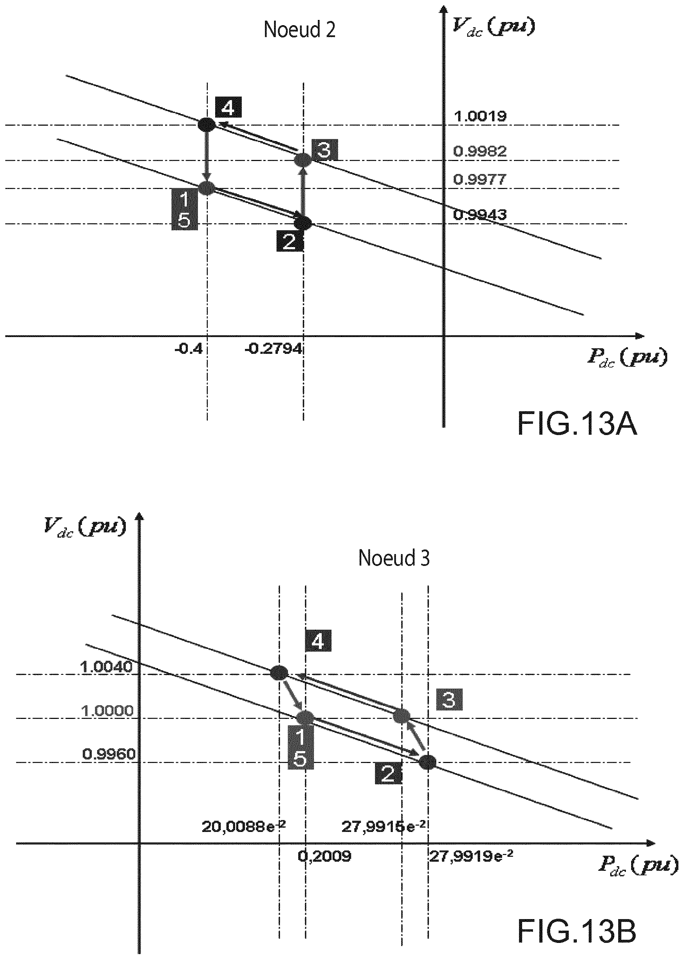

Une évolution détaillée de la puissance DC et de la tension DC sur le diagramme « droop » des noeuds, qui sont sous le contrôle de tension DC « droop » (noeuds 2 et 3) est représentée sur les figures 13A et 13B.

Comme illustré sur les figures 13A et 13B l'approche de contrôle secondaire a l'effet d'un déplacement parallèle de la caractéristiques « droop », ce qui signifie qu'un décalage (« offset ») est ajouté, en gardant la constante « droop » correspondante (pente). Au noeud 3, la tension DC est fixée à une valeur déterminée lors de l'application du contrôle secondaire. En fonction de cette valeur (considérée égale à 1 pu) la tension DC dans ce noeud doit augmenter ou diminuer et avec elle la tension DC dans les autres noeuds. Si l'on considère, par exemple, le premier moment où le contrôle secondaire est appliqué, la tension DC dans le noeud 3 doit augmenter de 0,9960 pu à 1 pu. Etant donné que la puissance DC dans les noeuds 1 et 2 est maintenue constante, l'augmentation de leurs tensions DC entraine la diminution de leurs courants DC injectés, ce qui occasionne une réduction des pertes de liaison. Ainsi, et étant donné que le convertisseur maître est le responsable pour atteindre l'équilibre de puissance, la puissance DC injectée dans ce noeud diminue également.

L'invention permet de tenir compte de la vulnérabilité du nouvel état stable VSC-MTDC après une perturbation à la suite de l'application du contrôle primaire « droop » choisi, une méthode utilisant la stratégie de contrôle de tension DC maître/esclave permet d'optimiser les valeurs des tensions DC sans influence perceptible sur la distribution de puissance, en ramenant la tension DC des convertisseurs à un point de référence déterminé.

**Références**

[1] C. Barker et R. Whitehouse, "Autonomous converter control in a multiterminal HVDC system" (Proc. IET ACDC'10, Londres, Royaume-Uni, 20-21 Octobre, 2010).

[2] L. Xu, L. Yao, et M. Bazargan, "DC Grid Management of a Multi-Terminal HVDC Transmission System for Large Offshore Wind Farms". (International Conférence on Sustainable Power Generation and Supply, SUPERGEN'09, pages 1-7, 2009).

[3] S. Wandenbrencke, "multi-terminal VSC HVDC connection of offshore wind farms" (2010-2011, pages 1 à 108, Université de Louvain).

[4] J. Beerfen, D. Van Hertem, et R. Belmans, "VSC MTDC systems with a distributed DC voltage control - A power flow approach," (Proc. IEEE PowerTech'11, Trondheim, Norvège, 19-23 Juin 2011, pages 1-6).

[5] C. Dierckxsens, K. Srivastava, M. Reza, S. Cole, J. Beerten, R. Belmans, « A distributed DV voltage control method for VSC MTDC systems (Electric Power Systems Research, Elsevier, 2011, pages 54-58).

**Revendications**

1. Procédé de contrôle d'un réseau multi-terminaux HVDC comprenant une stratégie de contrôle primaire tendant à revenir à un équilibre production de puissance-consommation de puissance et une stratégie de contrôle secondaire pour réduire toute variation de tension due à la première stratégie, **caractérisé en ce qu'**il comprend les étapes suivantes :

   - dans une période de temps t comprise entre 0 et T, on réalise un calcul de transit de puissance en fonctionnement normal, avec un noeud pris comme convertisseur maître,
   - au temps t=T, on produit une perturbation en un premier noeud autre que noeud précédent,
   - dans la période de temps t comprise entre T et 2T, un contrôle de tension « droop » est actif et la perte de puissance est répartie sur les autres noeuds,
   - au temps t=2T, on applique un contrôle secondaire suivant une stratégie maître/esclave, en fixant la tension à sa valeur avant la perturbation,
   - au temps t=3T, l'injection de puissance au premier noeud revient à sa valeur initiale, c'est-à-dire avant la perturbation, et le contrôle de tension « droop » est réactivé,
   - au temps t=4T, un contrôle secondaire est activé pour réduire la variation des tensions DC en appliquant une stratégie de contrôle de tension DC maître/esclave.

2. Procédé selon la revendication 1, dans lequel lors de la stratégie primaire on applique une stratégie de contrôle de tension DC de type « droop ».

3. Procédé selon l'une quelconque des revendications précédentes, dans lequel lors de la stratégie secondaire on applique une stratégie de contrôle de tension DC selon la topologie et la puissance des noeuds interconnectés

4. Procédé selon la revendication 3, dans la stratégie de contrôle de tension DC est une stratégie maître/esclave ou une stratégie par marge de tension.

5. Procédé selon la revendication 1, dans lequel T est adapté aux réponses des systèmes interconnectés sur le réseau.

**Patentansprüche**

1. Verfahren zum Regeln eines HVDC-Netzwerks (high voltage direct current

   - Hochspannungs-Gleichstrom-Übertragung (HGÜ)) mit mehreren Endgeräten, umfassend eine Primärregelungsstrategie, bei der angestrebt wird, ein Gleichgewicht zwischen Leistungserzeugung und Leistungsverbrauch zu erlangen, und eine Sekundärregelungsstrategie, um jegliche Spannungsänderung aufgrund der Primärstrategie zu vermindern, **dadurch gekennzeichnet, dass** es die nachfolgenden Schritte umfasst:

- in einer Zeitspanne t, die zwischen 0 und T liegt, Durchführen einer Leistungsübergangsberechnung im Normalbetrieb mit einem Knoten, der als Master-Umrichter erachtet wird,
- zur Zeit t = T Erzeugen einer Störung in einem anderen als den vorherigen ersten Knoten,

wobei

- in der Zeitspanne t, die zwischen T und 2T liegt, eine Spannungsregelung "droop" wirksam ist und der Leistungsverlust auf die weiteren Knoten verteilt wird,
- zur Zeit t = 2T, eine Sekundärregelung nach einer Master-Slave-Strategie angewandt wird, indem die Spannung auf ihren Wert vor der Störung festgelegt wird,
- zur Zeit t = 3T die Leistungseinspeisung am ersten Knoten auf ihren Anfangswert, d. h. den Wert vor der Störung, zurückkehrt, und die Spannungsregelung "droop" wieder aktiviert wird,
- zur Zeit t = 4T eine Sekundärregelung aktiviert wird, um die Änderung der Spannungen DC zu vermindern, indem eine Master-/Slave-Regelungsstrategie für die Spannung DC angewendet wird.

2. Verfahren nach Anspruch 1, wobei bei der Primärstrategie eine Regelungsstrategie für die Spannung DC vom Typ "droop" angewendet wird.

3. Verfahren nach einem der vorangehenden Ansprüche, wobei bei der Sekundärstrategie eine Regelungsstrategie für die Spannung DC gemäß der Topologie und der Leistung von zusammengeschalteten Knoten angewendet wird.

4. Verfahren nach Anspruch 3, wobei die Regelungsstrategie für die Spannung DC eine Master-Slave-Strategie oder eine Spannungsbereichs-Strategie ist.

5. Verfahren nach Anspruch 1, wobei T auf die Reaktionen der im Netz zusammengeschalteten Systeme angepasst ist.

## Claims

1. A method of controlling a multi-terminal HVDC network, the method comprising a primary control strategy tending to restore balance between power production and power consumption and a secondary control strategy for reducing any variation in voltage resulting from the first strategy, **characterized in that** it includes the following steps:

• in a period of time t lying in the range 0 to T, calculating power flow in normal operation, with a node that is taken as a master converter;
• at time t=T, producing a disturbance in a first node that is not the above-mentioned node;
• in the period of time t lying in the range T to 2T, voltage droop control is active and the loss of power is distributed over the other nodes;
• at time t=2T, applying a secondary control using a master/slave strategy, by fixing the voltage at its value before the disturbance;
• at time t=3T, the injection of power to the first node returns to its initial value, i.e. before the disturbance, and voltage droop control is reactivated; and
• at time t=4T, secondary control is activated in order to reduce the DC voltage variation by applying a master/slave DC voltage control strategy.

2. The method according to claim 1, wherein during the primary strategy, a droop type DC voltage control strategy is applied.

3. The method according to either preceding claim, wherein during the secondary strategy a DC voltage control strategy is applied that depends on the topology and the power of the interconnected nodes.

4. A method according to claim 3, wherein the DC voltage control strategy is a master/slave strategy or a voltage margin strategy.

5. A method according to claim 1, wherein T is adapted to the response times of the systems interconnected on the network.

FIG.1

FIG.2

FIG.3

FIG.4

FIG.5

FIG.6

FIG.7

FIG.8

FIG.9

$$V_{dc} = V_{dc\,0}, Y_{dc}, X_{dc\_mod}, V_{dc,o}, k, j = 0, n_{droop}, n_{pcontrol}$$

Calculer : $\Delta X_{dc,mod}^{(j)}$

$\left\| \Delta X_{dc,mod}^{(j)} \right\| < tol$

Oui

Fin

Non

j = j + 1

Calculer : $J^{(j)}$

$$\Delta V_{dc}^{(j)} = -\Delta X_{dc,mod}^{(j)} \cdot J^{(j)^{-1}} \cdot V_{dc}^{(j)}$$

$$V_{dc}^{(j+1)} = V_{dc}^{(j)} - \Delta V_{dc}^{(j)}$$

FIG.10

$P_{dc,1...(n-1)}$

$V_{dc,n}$

Calcul transit de puissance maitre / esclave

$P_{dc}$

$V_{dc}$

Défaut

$P_{dc,o}$

$V_{dc,o}$

$k_{droop}$

Calcul transit de puissance méthode généralisée

$V_{dc}$

FIG.11

$Y_{dc}$

# FIG.12A

# FIG.12B

FIG.13A

FIG.13B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **TEMESGEN HAILESELASSIE.** *Control of Multiterminal HVDC Transmission for Offshore Wind Energy,* 11 Septembre 2009
- **C. BARKER ; R. WHITEHOUSE.** Autonomous converter control in a multiterminal HVDC system. *Proc. IET ACDC'10,* 20 Octobre 2010
- **L. XU ; L. YAO ; M. BAZARGAN.** DC Grid Management of a Multi-Terminal HVDC Transmission System for Large Offshore Wind Farms. *International Conférence on Sustainable Power Generation and Supply, SUPERGEN'09,* 2009, 1-7
- **S. WANDENBRENCKE.** multi-terminal VSC HVDC connection of offshore wind farms. Université de Louvain, 2010, vol. 2011, 1-108
- **J. BEERFEN ; D. VAN HERTEM ; R. BELMANS.** VSC MTDC systems with a distributed DC voltage control - A power flow approach. *Proc. IEEE PowerTech'11,* 19 Juin 2011, 1-6
- A distributed DV voltage control method for VSC MTDC systems. **C. DIERCKXSENS ; K. SRIVASTAVA ; M. REZA ; S. COLE ; J. BEERTEN ; R. BELMANS.** Electric Power Systems Research. Elsevier, 2011, 54-58